# EUROPEAN PATENT APPLICATION

(11) **EP 1 884 823 A1**
(43) Date of publication of application: **06.02.2008**
(21) Application number: 07015255.8
(22) Date of filing: 03.08.2007
(51) Int. Cl.: G02F 1/13357

(54) **Backlight assembly and a liquid crystal display comprising the assembly**

(30) Priority: 04.08.2006 KR 20060073928
(71) Applicant: Samsung Electronics Co., Ltd., Yeongtong-gu Suwon-city, Gyeonggi-do 442-742 (KR)
(72) Inventor: Lee, Sung-hun, Gyeongsangnam-do (KR); Lee, Chul-woo, Chungcheongnam-do (KR)
(74) Representative: Dr. Weitzel & Partner

(57) **Abstract**

A backlight assembly (100) including a plurality of lamps (190), a reflection sheet (160) disposed below the plurality of lamps, the reflection sheet reflecting light upward from below the plurality of lamps and including a bottom surface (161) and a pair of side walls (163) extending upward from two opposite sides of the bottom surface, wherein each of the side walls has an upper flat base, a lower flat base, and a pair of sloping portions, wherein the upper flat bases of the side walls form an upper flat base of the reflection sheet and the lower flat bases of the side walls form a lower flat base of the reflection sheet, a heat blocking plate (140) disposed above the lamps and on the lower flat base of the reflection sheet, and a bottom receiving container (170) receiving the plurality of lamps, the reflection sheet, and the heat blocking plate.

## Description

### BACKGROUND OF THE INVENTION

### Technical Field

The present invention relates to a backlight assembly, and more particularly, to a backlight assembly having a reflection sheet provided with a heat blocking plate supporter, and a liquid crystal display including the backlight assembly.

### Discussion of the Related Art

Liquid crystal displays (LCDs) are among the most commonly used flat panel displays. For example, LCDs are commonly found in a variety of electronic devices such as flat screen televisions, laptop computers, cell phones and digital cameras.

As modem society becomes more information-oriented, there is a growing demand in the LCD market for a thin large-scale screen. Accordingly, ultra-large screen LCD applications, such as public information displays (PIDs) or outdoor advertising signboards, are greatly increasing.

As the size of ultra-large screen LCDs such as PIDs increases, the size of a backlight assembly disposed at the rear side of such an LCD for supplying an LCD panel of the LCD with light also, increases. However, as the size of the backlight assembly increases, heat generated by a lamp provided at the backlight assembly is transferred to the LCD panel by convection, thus resulting in an inferior picture quality.

To overcome this, a heat blocking plate is provided with the backlight assembly to prevent the heat generated by the lamp from being transferred to the LCD panel. In this regard, to support a heat blocking plate on the backlight assembly, a rectangular mold frame having four sides on which the heat blocking plate is placed has been used. However, existing LCDs that do not include heat blocking plates are not compatible with LCDs for TVs of the same screen size because they use different components, thereby resulting in an increase in the manufacturing cost of the mold and other associated materials, thus increasing the manufacturing cost of the LCD.

Accordingly, there exists a need for a backlight assembly that includes a heat blocking plate and that is compatible with LCDs for TVs of the same screen size so that manufacturing costs of an LCD can be reduced.

### SUMMARY OF THE INVENTION

According to an exemplary embodiment of the present invention, there is provided a backlight assembly including a plurality of lamps, a reflection sheet disposed below the plurality of lamps, the reflection sheet reflecting light upward from below the plurality of lamps and including a bottom surface and a pair of side walls extending upward from two opposite sides of the bottom surface, wherein the side walls have an upper flat base, a lower flat base, and a pair of sloping portions, wherein the upper flat bases of the side walls form an upper flat base of the reflection sheet and the lower flat bases of the side walls form a lower flat base of the reflection sheet, a heat blocking plate disposed above the plurality of lamps and on the lower flat base of the reflection sheet, and a bottom receiving container receiving the plurality of lamps, the reflection sheet, and the heat blocking plate,

According to an exemplary embodiment of the present invention, there is provided a liquid crystal display (LCD) including an LCD panel displaying an image, and a backlight assembly providing light to the LCD panel and comprising a plurality of lamps, a reflection sheet disposed below the plurality of lamps, the reflection sheet reflecting light upward from below the plurality of lamps and including a bottom surface and a pair of side walls extending upward from two opposite sides of the bottom surface, wherein each of the side walls has an upper flat base, a lower flat base, and a pair of sloping portions, wherein the upper flat bases of the side walls form an upper flat base of the reflection sheet and the lower flat bases of the side walls form a lower flat base of the reflection sheet, a heat blocking plate disposed above the lamps and on the lower flat base of the reflection sheet, and a bottom receiving container receiving the plurality of lamps, the reflection sheet, and the heat blocking plate.

### BRIEF DESCRIPTION OF THE DRAWINGS

The above and other features of the present invention will become more apparent by describing in detail exemplary embodiments thereof with reference to the attached drawings in which:
FIG. 1 is an exploded perspective view of a backlight assembly according to an exemplary embodiment of the present invention;
FIG. 2A is a cross-sectional view taken along line II-II' after assembling the backlight assembly shown in FIG. 1;
FIG. 2B is an exemplary embodiment of a bottom receiving container illustrated in the backlight assembly shown in FIG. 2A;
FIG. 3 is a cross-sectional view taken along line III-III' after assembling the backlight assembly shown in FIG. 1;
FIG. 4 is a bottom perspective view of a reflection sheet for a backlight assembly according to an exemplary embodiment of the present invention;
FIG. 5 is a cross-sectional view of a backlight assembly including the reflection sheet shown in FIG. 4;
FIG. 6 is a perspective view of a reflection sheet for a backlight assembly according to an exemplary embodiment of the present invention;
FIG. 7 is a cross-sectional view of a backlight assembly including the reflection sheet shown in FIG. 6;
**FIG. 8** is a perspective view of a side mold for a backlight assembly according to an exemplary embodiment of the present invention;
**FIG. 9** is a cross-sectional view of a backlight assembly including the side mold shown in FIG. 8; and
FIG. 10 is an exploded perspective view of a liquid crystal display according to an exemplary embodiment of the present invention.

### DETAILED DESCRIPTION OF EXEMPLARY EMBODIMENTS

The present invention will be described more fully hereinafter with reference to the accompanying drawings, in which exemplary embodiments of the invention, are shown. The present invention may, however, be embodied in many different forms and should not be construed as being limited to the embodiments set forth herein,

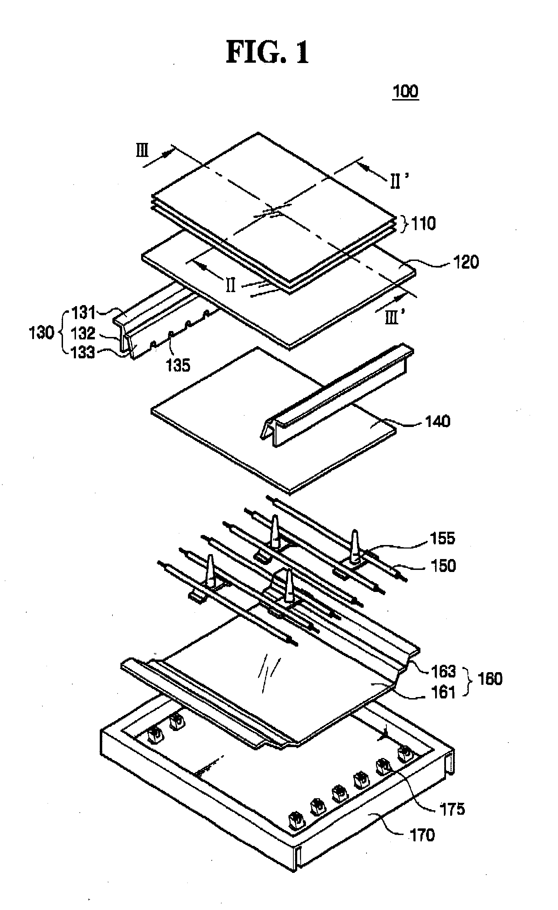

A backlight assembly according to an exemplary embodiment of the present invention will now be described with reference to FIGS. 1 through 3.

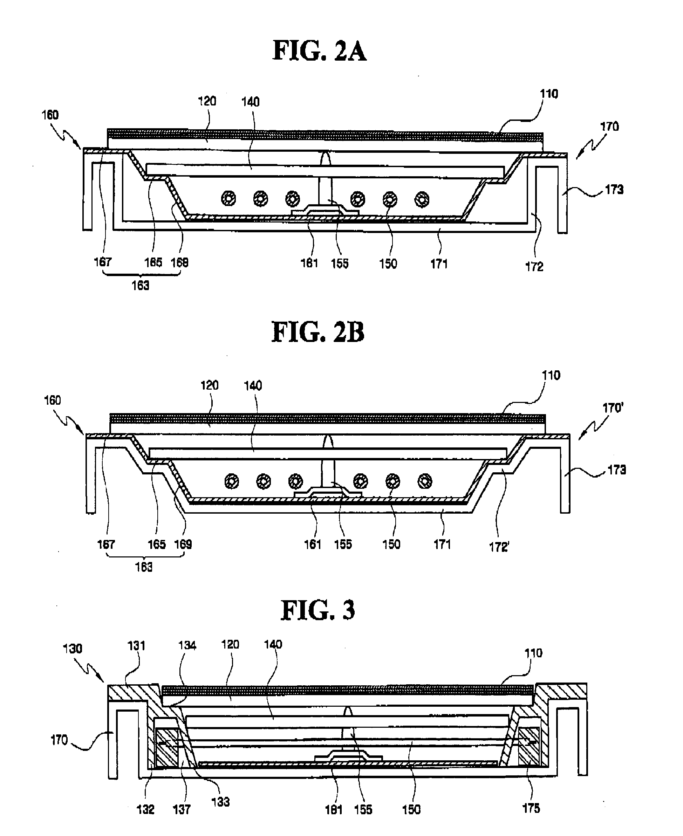

FIG. 1 is an exploded perspective view of a backlight assembly 100 according to an exemplary embodiment of the present invention, FIG. 2A is a cross-sectional view taken along line II-II' after assembling the backlight assembly shown in FIG. 1, FIG. 2B is an exemplary embodiment of a bottom receiving container illustrated in the backlight assembly shown in FIG. 2A, and FIG. 3 is a cross-sectional view taken along line III-III' after assembling the backlight assembly shown in FIG. 1,

Referring to FIG. 1, the backlight assembly 100 includes a plurality of lamps 150, a reflection sheet 160, a side mold 130, a heat blocking plate 140, optical members including a plurality of optical sheets 110 and a diffusion plate 120, and a bottom receiving container 170.

The lamps 150 are disposed under a liquid crystal display (LCD) panel (not shown) and supply the LCD panel with light. Here, the lamps 150 may be, but are not limited to, light emitting diodes (LEDs), cold cathode fluorescent lamps (CCFLs), external electrode fluorescent lamps (EEFLs), and any other types of light sources that can provide the LCD panel with light. The plurality of lamps 150 may be spaced apart from each other by a predetermined distance and positioned in parallel to each other in the same plane, forming a direct illumination type lamp structure.

The lamps 150 are inserted into a plurality of through holes 135 formed on the side mold 130 and securely fixed in corresponding sockets 175 by the side mold 130. The lamps 150 are exposed between two opposite sides of the side mold 130 and irradiate light. Here, the sockets 175 may be fixed to an alignment plate (not shown) disposed at a bottom surface of the bottom receiving container 170 so that they are arranged along the periphery of the bottom receiving container 170. In an alternative embodiment, a predetermined voltage application unit (not shown) may be provided to apply driving voltages to electrodes of the lamps 150.

The reflection sheet 160 is disposed below the lamps 150 and reflects light upward from below the lamps 150, The reflection sheet 160 may be formed of a material having high elasticity and a high reflective characteristic, thereby enabling a thin structure, For example, the reflection sheet 160 may include, but is not limited to, micro polyethylene terephthalate (MCPET), which maybe thickness approximately 1.0 to 2.0 mm.

Referring to FIGS. 1 through 2B, the reflection sheet 160 will be described in more detail. The reflection sheet 160 includes a bottom surface 161 and side walls 163.

The side walls 163 extend upward from two opposite sides of the bottom surface 161 in a series of terraces having sloping sides. Each of the side walls 163 may include an upper flat base 167, a lower flat base 165, and a sloping portion 169, In this case, the upper flat base 167 and the lower flat base 165 are substantially parallel with the bottom surface 161.

The upper flat base 167 is attached and fixed to the bottom receiving container 170. For example, the upper flat base 167 may contact the top end of the side wall of the bottom receiving container 170. In this case, a predetermined adhesive may be applied between parts of the bottom receiving container 170 and the upper flat base 167 that contact each other.

The upper flat base 167 may be raised approximately 14 to 18 mm above the bottom surface 161 of the reflection sheet 160. The optical members including the diffusion plate 120 and the plurality of optical sheets 110 are disposed on the upper flat base 167.

The lower flat base 165 is connected to the upper flat base 167 through the sloping portion 169 and the heat blocking plate 140 may be placed on the lower flat base 165. The lower flat base 165 may be raised approximately 8 to 10 mm above the bottom surface 161 of the reflection sheet 160.

An optical member supporting stud 155 for supporting the central portions of the diffusion plate 120 and the heat blocking plate 140 may be provided on the bottom surface 161 of the reflection sheet 160. The optical member supporting stud 155 may be fixed to the bottom receiving container 170. To minimize loss of light emitted from the lamps 150, the optical member supporting stud 155 may be made of a transparent material.

Referring back to FIG. 1, the side molds 130 may be positioned at opposite ends of the lamps 150, for example, near the ends of the lamps 150 where electrodes are formed, Here, each of the side molds 130 may be formed, for example, in a linear shape, and may be combined with the bottom receiving container 170, thereby securely fixing the lamps 150, which will be described in more detail with reference to FIGS. 1 and 3. Each of the side molds 130 may be positioned at opposite sides of the reflection sheet 160 where no side wall is formed. The side mold 130 may include a top surface 131, an external side wall 132 perpendicular to the top surface 131, and an internal side wall 133 connected to the external side wall 132,

Here, the internal side wall 133 may protrude from the external side wall 132 along a predetermined flat base 134 and slope downward to form a tapered structure. The flat base 134 has a predetermined step difference with respect to the top surface 131 of the side mold 130, and the optical members, e.g., the diffusion plate 120, may be placed thereon. The flat base 134 has substantially the same height as an upper flat base (167 of the reflection sheet 160 shown in FIG. 2A).

The through holes 135 are formed at the lower end of the tapered internal side wall 133. The through holes 135 are connected in a one-on-one relationship to the lamps 150, and serve to securely fix the lamps 150 to be connected with the corresponding sockets 175, In more detail, when two side molds 130 are disposed to face each other where no side walls 163 are formed, opposite ends of each of the lamps 150 are inserted into the through holes 135 formed in pairs in each of the side molds 130 and connected to the corresponding sockets 175.

To reflect light emitted from the lamps 150, the tapered internal side wall 133 may be made of a light reflecting resin, e.g., a white polycarbonate (PC), but is not limited thereto, so long as the light reflecting resin has high reflectivity.

A predetermined space may be created between the bottom surface of the external side wall 132 and the bottom surface of the internal side wall 133. The predetermined space may be, for example, a socket coupling groove 137 into which each of the sockets 175 is inserted. The socket coupling groove 137 may be formed in a length direction of the side mold 130, for example, in a longitudinal direction, and is coupled with the sockets 175 when combined with the bottom receiving container 170. The socket coupling groove 137 is engaged with the sockets 175, so that the sockets 175 are not exposed to the outside. Accordingly, the lamps 150 securely fixed to the sockets 175 protrude past the through holes 135 formed on the tapered internal side wall 133 of the side wall 130.

A plurality of locking units (not shown) coupled to the diffusion plate 120 may be provided on the external side wall 132 disposed between the top surface 131 of the side mold 130 and the flat base 134 of the internal side wall 133. The locking units are coupled to the side surface of the diffusion plate 120 and prevent vertical movement of the diffusion plate 120.

The optical members 110 and 120, which focus light emitted from the lamps 150 and diffuse the light, are positioned on the lamps 150.

The diffusion plate 120 may be plate-shaped and may be disposed on the upper flat base 167 of the reflection sheet 160 or on the flat base 134 of the side molds 130. In detail, two facing sides of the diffusion plate 120 may be placed on the upper flat bases 167 of the reflection sheet 160 and the other two facing sides thereof may be placed on the flat base 134 of the side molds 130.

As described above, the central portion of the diffusion plate 120 is supported/secured by the optical member supporting stud 155. The optical member supporting stud 155 contacts the bottom surface of the diffusion plate 120 and prevents the diffusion plate 120 from sagging.

The plurality of optical sheets 110 may be positioned on the diffusion plate 120, The optical sheets 110 diffuse and focus light coming from the lamps 150 and may be composed of a diffusion sheet, a prism sheet, a protective sheet, and the like.

The heat blocking plate 140 may be positioned between the lamps 150 and the diffusion plate 120. Here, the heat blocking plate 140 prevents the light generated by the lamps 150 from being transferred to the LCD panel through the diffusion plate 120 by convection.

In addition, the heat blocking plate 140 may be placed on the lower flat base 165 of the reflection sheet 160, and the central portion thereof may be supported by the optical member supporting stud 155. In this case, a plurality of holes (not shown) may be formed at the center of the heat blocking plate 140, which is a portion corresponding to the optical member supporting stud 155. In more detail, opposing sides of the heat blocking plate 140 may be placed on and securely fixed to opposing lower flat bases 165 of the reflection sheet 160 and the holes (not shown) formed at the center of the heat blocking plate 140 are engaged with the optical member supporting stud 155, thereby preventing the heat blocking plate 140 from sagging. Here, the optical member supporting stud 155 primarily supports the heat blocking plate 140 and, secondarily, extends past the plurality of holes formed at the heat blocking plate 140 to support the diffusion plate 120.

The heat blocking plate 140 may include a transparent, durable material, for example, polymethyl methacrylate (PMMA) or polycarbonate, but is not limited thereto.

Referring to FIGS. 1, 2A and 3, the bottom receiving container 170 has a rectangular shape and includes side walls, e.g., an internal side wall 172 and an external side wall 173, formed along edges of its bottom surface 171. The optical members 110 and 120, the heat blocking plate 140, the lamps 150, the side mold 130, and the reflection sheet 160 are received in the interior of the internal side wall 172 of the bottom receiving container 170. Here, the internal side wall 172 of the bottom receiving container 170 may extend vertically from the edges of the bottom surface 171.

In addition, the side mold 130 and the reflection sheet 160 may be coupled to and disposed on the top end of the internal side wall 172 of the bottom receiving container 170, For example, the top surface 131 of the side mold 130 and the upper flat base 167 of the reflection sheet 160 may overlie the top end of the internal side wall 172 of the bottom receiving container 170.

Hereinafter, an exemplary embodiment of the bottom receiving container 170 in the backlight assembly shown in FIG. 2A will be described with reference to FIG. 2B,

For convenience of explanation, identical symbols are used in FIG. 2B for components that are the same as those shown in FIG. 2A, and thus, a detailed description thereof will be omitted.

Referring to FIG. 2B, a bottom receiving container 170' may include a bottom surface 171, an internal side wall 172' and an external side wall 173, which is substantially the same as described above with regard to the bottom receiving container 170 of FIG. 2A. The internal side wall 172' of the bottom receiving container 170' may be terraced in conformity with the side walls 163 of the reflection sheet 160.

In more detail, the internal side wall 172' adjacent to the side walls 163 of the reflection sheet 160 has the same structure as the side walls 163, e.g., a terraced structure, to support the lower flat base 165 and the sloping portion 169 provided on the reflection sheet 160. Accordingly, the heat blocking plate 140 placed on the lower flat base 165 of the reflection sheet 160 can be securely supported by the lower flat base 165 and the internal side wall 172' of the bottom receiving container 170'.

Although the internal side wall 172' adjacent to the side walls 163 of the reflection sheet 160 has been illustrated with reference to the current embodiment of the invention, the invention is not limited to the illustrated internal side wall. For example, it is to be understood that an internal side wall of a bottom receiving container adjacent to a side mold may be modified to have substantially the same structure as the side mold, thereby allowing the internal side wall of a bottom receiving container to serve as the side mold.

Hereinafter, a backlight assembly according to an exemplary embodiment of the present invention will be described in detail with reference to FIGS, 4 through 7.

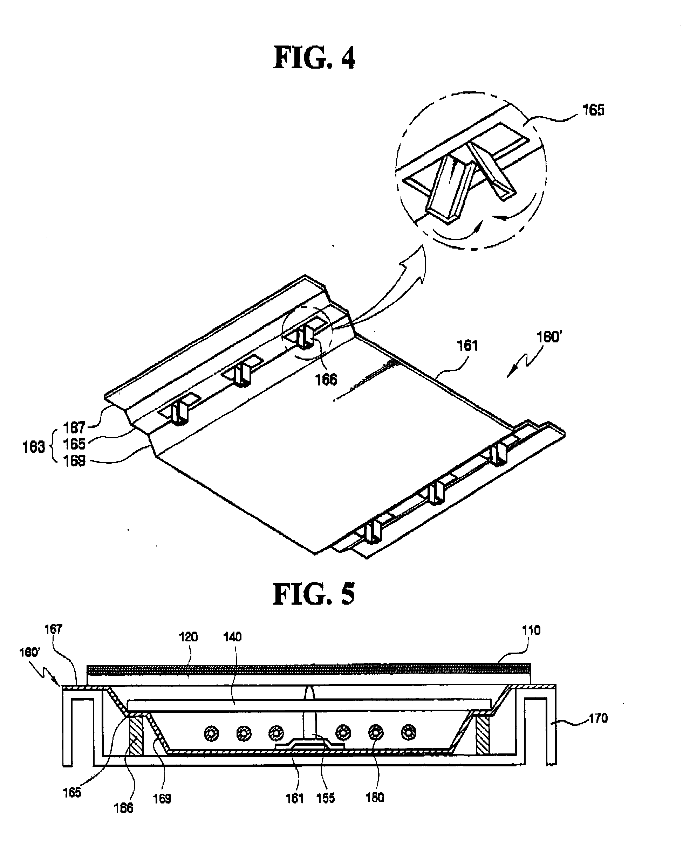

In the following description with regard to FIGS. 4 through 7, a backlight assembly including a bottom receiving container (see 170 of FIG. 2A) will be illustrated by way of example.

FIG. 4 is a bottom perspective view of a reflection sheet 160' for a backlight assembly according to an exemplary embodiment of the present invention and FIG. 5 is a cross-sectional view of a backlight assembly including the reflection sheet shown in FIG. 4. For convenience of explanation, identical symbols are used in FIGS, 4 and 5 for components that are the same as those shown in FIGS. 1 through 3, and thus, a detailed description thereof will be omitted.

Referring to FIGS. 4 and 5, the reflection sheet 160' includes a bottom surface 161 and a pair of side walls 163. The reflection sheet 160' may further include at least one supporting unit 166. In more detail, the reflection sheet 160' includes a pair of terraced side walls 163 which upwardly extend from two facing sides of the reflection sheet 160' and are bent in multiple stages, providing an upper flat base 167, a lower flat base 165, and a sloping portion 169. The supporting unit 166 may also protrude downward from the lower flat base 165.

The supporting unit 166 may be formed by cutting a predetermined region of the lower flat base 165 and bending the cut region, For example, the supporting unit 166 may have a stanchion shape having a rectangular cross-section with at least one plane opened, but the invention is not limited thereto.

In addition, the supporting unit 166 may contact the bottom surface of the bottom receiving container 170 and support the reflection sheet 160', so that the heat Mocking plate 140 placed on the lower flat base 165 can be securely supported.

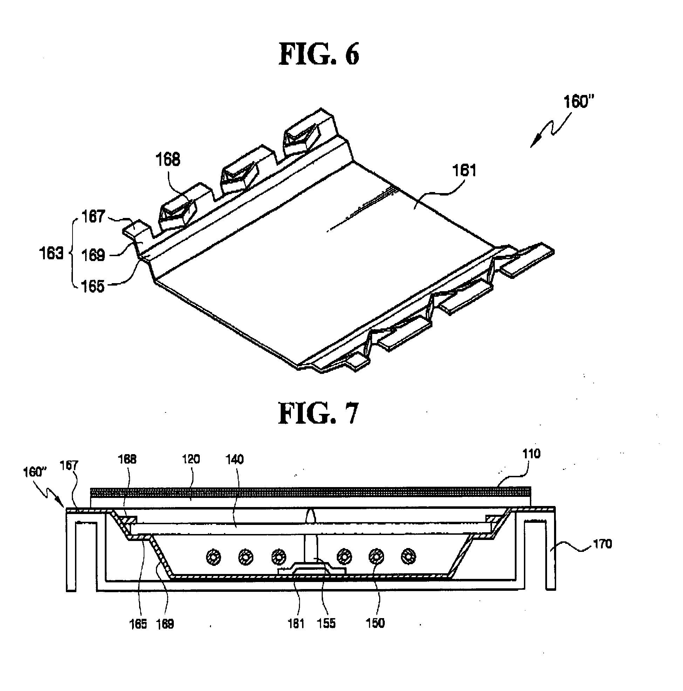

Hereinafter, a backlight assembly according to an exemplary embodiment of the present invention will be described in detail with reference to FIGS. 6 and 7.

For convenience of explanation, identical symbols are used in FIGS. 6 and 7 for components that are the same as those shown in FIGS. 1 through 5, and thus, a detailed description thereof will be omitted.

FIG. 6 is a perspective view of a reflection sheet 160" for a backlight assembly according to an exemplary embodiment of the present invention, and FIG. 7 is a cross-sectional view of a backlight assembly including the reflection sheet shown in FIG. 6.

Referring to FIGS. 6 and 7, the reflection sheet 160" includes a bottom surface 161 and a pair of terraced side walls 163 which upwardly extend from two facing sides of the reflection sheet 160" and are bent in multiple stages, providing an upper flat base 167, a lower flat base 165, and a sloping portion 169. The reflection sheet 160" may further include at least one fixing unit 168 formed on the sloping portion 169 between the upper flat base 167 and the lower flat base 165.

In more detail, the fixing unit 168 may be formed on the sloping portion 169 connecting the upper flat base 167 and the lower flat base 165 of the reflection sheet 160". Here, the fixing unit 168 may be formed such that predetermined regions of the upper flat base and sloping portion 167 and 169 are cut and the cut portions are then internally bent to be substantially parallel with the upper and lower flat bases 167 and 165. In this case, the predetermined region of the upper flat base 167 can be fixed and adhered to an upper flat base that it comes in contact with, such as an adjacent upper flat base 167, as the sloping portion 169 from which it protrudes is bent.

The fixing unit 168 and the lower flat base 165 are spaced a predetermined distance apart from each other in a longitudinal direction, thereby forming a predetermined receiving space therebetween. Accordingly, a heat blocking plate 140 may be placed on the lower flat base 165. Both sides of the heat blocking plate 140 may be received in the receiving space formed between the fixing unit 168 and the lower flat base 165. Here, the top surface of the heat blocking plate 140 is brought into contact with the fixing unit 168, so that it can be securely fixed. In other words, the fixing unit 168 contacts the top surface of the heat blocking plate 140, thereby preventing vertical movement of the heat blocking plate 140.

Although reflection sheets according to exemplary embodiments of the present invention have been illustrated with reference to FIGS. 4 through 7, the invention is not limited to the illustrated reflection sheets. For example, it is to be understood that a combination of the illustrated reflection sheets, such as a reflection sheet structure in which both a supporting unit and a fixing unit are provided, can be applied to a backlight assembly according to an exemplary embodiment of the present invention,

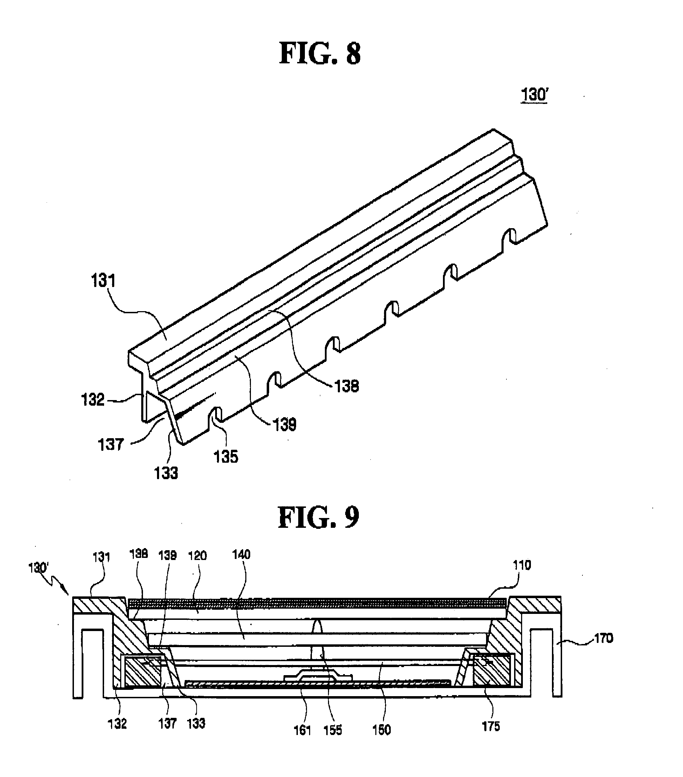

Hereinafter, a backlight assembly according to an exemplary embodiment of the present invention will be described in detail with reference to FIGS. 8 and 9.

In the following description with regard to FIGS. 8 and 9, a backlight assembly including a bottom receiving container (see 170 of FIG. 2A) will be illustrated by way of example.

**FIG.** 8 is a perspective view of a side mold 130' for a backlight assembly according to an exemplary embodiment of the present invention, and FIG. 9 is a cross-sectional view of a backlight assembly including the side mold shown in FIG. 8.

Referring to FIGS. 8 and 9, the side mold 130' includes a top surface 131, an external side wall 132 perpendicular to the top surface 131, and an internal side wall 133 connected to the external side wall 132. The side mold 130' may be formed in a linear shape. Here, the internal side wall 133 may protrude downward and at an angle from the external side wall 132, forming a two-step terraced structure having at least two support bases, for example, first and second support bases 138 and 139. Here, each of the first and second support bases 138 and 139 formed on the tapered internal side wall 133 may have a predetermined step difference with respect to the top surface 131 of the side mold 130'.

Here, the first support base 138 has substantially the same height as an upper flat base (167 of the reflection sheet 160 shown in FIG. 2A). The second support base 138 has substantially the same height as a lower flat base (165 of the reflection sheet 160 shown in FIG. 2A).

In addition, optical members including a diffusion plate 120 and a plurality of optical sheets 110 may be placed on the first support base 138 and a heat blocking plate 140 may be placed on the second support base 138.

A plurality through holes 135 may be formed at the lower end of the tapered internal side wall 133. The through holes 135 are connected in a one-to-one relationship to lamps 150, and serve to securely fix the lamps 150 to be connected with corresponding sockets 175. In detail, when two side molds 130' are disposed to face each other where no side walls 163 are formed, opposite ends of each of the lamps 150 are inserted into the through holes 135 formed in pairs in each of the side molds 130' and connected to the corresponding sockets 175.

To reflect light emitted from the lamps 150, the tapered internal side wall 133 may be made of a light reflecting resin, e.g., a white polycarbonate (PC), but is not limited thereto, so long as the light reflecting resin has high reflectivity.

A plurality of locking units (not shown) coupled to the heat blocking plate 140 and the diffusion plate 120 may be provided on the tapered internal side wall 133 between the first and second support bases 138 and 139 or between and the first and second support bases 138 and 139. The locking units are coupled to the side surfaces of the heat blocking plate 140 and the diffusion plate 120 and prevent vertical movement thereof.

A socket coupling groove 137 may be provided between each of the bottom surfaces of the side mold 130', the bottom surface of the external side wall 132, and the bottom surface of the tapered internal side wall 133. The socket coupling groove 137 surrounds each of the sockets 175 combined with the bottom receiving container 170, thereby covering the sockets 175 so that they are not exposed to the outside,

Although the side mold used in the backlight assembly according to an exemplary embodiment of the present invention has been illustrated with reference to FIGS. 8 and 9, the invention is not limited to the illustrated example. For example, it is to be understood that the illustrated side mold can be applied to any of the backlight assemblies shown in FIGS. 1 through 7.

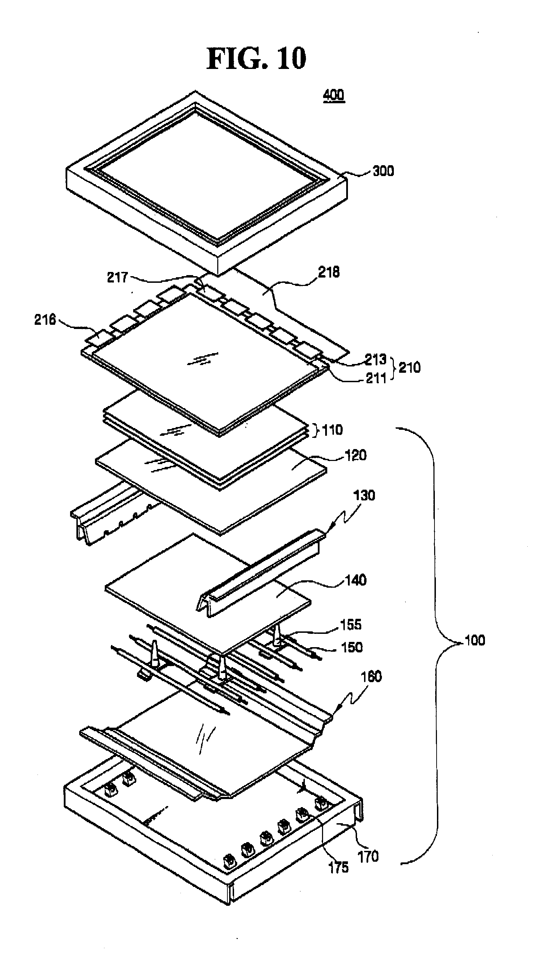

Next, a liquid crystal display including a backlight assembly according to an exemplary embodiment of the present invention will be described in detail with reference to FIG. 10.

FIG. 10 is an exploded perspective view of a liquid crystal display 400 according to an exemplary embodiment of the present invention,

Referring to FIG. 10, the liquid crystal display 400 includes an LCD panel 210 and a backlight assembly 100.

The LCD panel 210 displays an image, and includes a first substrate 211, a second substrate 213, and a liquid crystal layer (not shown) formed between the first substrate 211 and the second substrate 213.

In the first substrate 211 are formed a plurality of gate lines extending in a first direction at predetermined intervals, a plurality of data lines extending in a second direction to intersect the gate lines and arranged at predetermined intervals, pixel electrodes arranged in a matrix form in a pixel region defined by the gate lines and the data lines, and thin film transistors (TFTs) switched by a signal of the gate lines to transmit a signal of the data lines to each of the pixel electrodes.

In the second substrate 213 are formed light blocking patterns for blocking light applied to a portion other than the pixel region, an RGB color filter pattern for expressing colors, and a common electrode for creating an image.

The first substrate 211 and the second substrate 213 are bonded to each other using a sealant, glass frit or the like, with a predetermined interval spaced by a spacer, and the liquid crystal layer having optical anisotropy is formed therebetween.

A printed circuit board (PCB) 218 is electrically connected to one side of the LCD panel 210 by tape carrier packages (TCPs) 216 and 217. A plurality of electronic parts for driving the LCD panel 210 and generating control signals are mounted on the PCB 218 by surface mount technology (SMT). In addition, a driving integrated circuit (IC) for driving the LCD panel 210 is mounted in the center of the TCPs 216 and 217. The PCB 218 and the TCPs 216 and 217 apply a driving signal and a timing signal to the gate lines and the data lines of the first substrate 211 to control the arrangement angle of liquid crystal molecules and the timing for the arrangement of the liquid crystal molecules. Here, the PCB 218 may be bent toward the rear surface of the bottom receiving container 170 to be attached thereto.

The backlight assembly 100 is positioned under the LCD panel 210 to provide light to the LCD panel 210. The backlight assembly 100 may include a plurality of lamps 150, a reflection sheet 160, a side mold 130, a heat blocking plate 140, optical members 110 and 120, and a bottom receiving container 170.

An upper receiving container 300 is combined with the bottom receiving container 170 of the backlight assembly 100 and receives the LCD panel 210 and the backlight assembly 100 to define an effective display area. The upper receiving container 300 is combined with the bottom receiving container 170 by, but not limited to, a hook or screw.

In a backlight assembly according to an exemplary embodiment of the present invention and an LCD including the same, since a heat blocking plate is supported using a reflection sheet, the size of a mold frame can be reduced, thereby reducing the cost associated with manufacturing the mold and other associated materials. In addition, since components of the backlight assembly are compatible with those of existing LCDs for use in TV monitors, or the like, the manufacturing cost of an LCD can be reduced. Further, a conventional LCD for a TV monitor can be upgraded to a public information display (PID) by replacing a reflection sheet and a side mold of the backlight assembly with new ones, thereby enabling PID/TV compatibility.

While the present invention has been particularly shown and described with reference to exemplary embodiments thereof, it will be understood by those of ordinary skill in the art that various changes in form and details may be made therein without departing from the spirit and scope of the present invention as defined by the following claims.

## Claims

1. A backlight assembly comprising:
a plurality of lamps;
a reflection sheet disposed below the plurality of lamps, the reflection sheet reflecting light upward from below the plurality of lamps and including a bottom surface and a pair of side walls extending upward from two opposite sides of the bottom surface, wherein each of the side walls has an upper flat base, a lower flat base, and a pair of sloping portions, wherein the upper flat bases of the side walls form an upper flat base of the reflection sheet and the lower flat bases of the side walls form a lower flat base of the reflection sheet;
a heat blocking plate disposed above the plurality of lamps and on the lower flat base of the reflection sheet; and
a bottom receiving container receiving the plurality of lamps, the reflection sheet, and the heat blocking plate.

2. The backlight assembly of claim 1, wherein a thickness of the reflection sheet is approximately 1.0 mm to approximately 2.0 mm.

3. The backlight assembly of claim 1, wherein the upper flat base of the reflection sheet is approximately 14,0 mm to approximately 18.0 mm above the bottom surface of the reflection sheet.

4. The backlight assembly of claim 1, wherein the lower flat base of the reflection sheet is approximately 8.0 mm to approximately 10.0 mm above the bottom surface of the reflection sheet.

5. The backlight assembly of claim 1, wherein the bottom receiving container includes a bottom surface, and internal side walls extending from edges of the bottom surface of the bottom receiving container along the side walls of the reflection sheet.

6. The backlight assembly of claim 1, further comprising a supporting unit protruding downward from the lower flat base of the reflection sheet.

7. The backlight assembly of claim 6, wherein the supporting unit is formed by cutting a region of a lower flat base of one of the side walls of the reflection sheet and bending the cut region.

8. The backlight assembly of claim 6, wherein the supporting unit contacts a bottom surface of the bottom receiving container and supports the reflection sheet.

9. The backlight assembly of claim 1, further comprising a fixing unit protruding from a sloping portion of one of the side walls of the reflection sheet between the upper flat base and the lower flat base of the reflection sheet, wherein the fixing unit and the lower flat base of the reflection sheet are spaced a distance apart from each other in a longitudinal direction to form a receiving space between the fixing unit and the lower flat base of the reflection sheet.

10. The backlight assembly of claim 9, wherein the fixing unit is formed by cutting a region of an upper flat base and a sloping portion of one of the side walls of the reflection sheet by a width and then internally bending the cut region to be substantially parallel with a lower flat base of the side wall from which it was cut.

11. The backlight assembly of claim 9, wherein the heat blocking plate is placed on the lower flat base of the reflection sheet and a side of the heat blocking plate is received in the receiving space.

12. The backlight assembly of claim 1, further comprising a diffusion plate disposed above the heat blocking plate and on the upper flat base of the reflection sheet.

13. The backlight assembly of claim 1, further comprising a pair of side molds disposed near two opposite sides of the reflection sheet without the side walls, each of the side molds having a plurality of through holes, the side molds fixing the plurality of lamps.

14. The backlight assembly of claim 13, further comprising a plurality of sockets disposed on a bottom surface of the bottom receiving container and adjacent to each of the side molds, the plurality of sockets connecting to the plurality of lamps through the plurality of through holes of each of the side molds.

15. The backlight assembly of claim 14, further comprising a socket coupling groove disposed between an external side wall and an internal side wall of each of the side molds, the socket coupling grooves surrounding the plurality of sockets adjacent to each of the side molds, respectively.

16. The backlight assembly of claim 13, wherein each of the side molds has a tapered internal side wall formed in a two-step shape having a first support base and a second support base, wherein the first support base and the second support base have different heights.

17. The backlight assembly of claim 16, wherein the second support base has substantially the same height as the lower flat base of the reflection sheet and the heat blocking plate is placed on the second support base.

18. The backlight assembly of claim 16, wherein the tapered internal side walls are made of a reflective material.

19. A liquid crystal display (LCD) comprising:
an LCD panel displaying an image; and
a backlight assembly providing light to the LCD panel and comprising a plurality of lamps, a reflection sheet disposed below the plurality of lamps, the reflection sheet reflecting light upward from below the plurality of lamps and including a bottom surface and a pair of side walls extending upward from two opposite sides of the bottom surface, wherein each of the side walls has an upper flat base, a lower flat base, and a pair of sloping portions, wherein the upper flat bases of the side walls form an upper flat base of the reflection sheet and the lower flat bases of the side walls form a lower flat base of the reflection sheet, a heat blocking plate disposed above the lamps and on the lower flat base of the reflection sheet, and a bottom receiving container receiving the plurality of lamps, the reflection sheet, and the heat blocking plate.
